(19) Europäisches Patentamt

European Patent Office

Office européen des brevets

(11) Publication number: **0 077 987**
**B1**

(12) **EUROPEAN PATENT SPECIFICATION**

(45) Date of publication of patent specification: **27.08.86**

(21) Application number: **82109558.5**

(22) Date of filing: **15.10.82**

(51) Int. Cl.⁴: **G 10 K 11/16, B 60 R 13/08, B 32 B 7/02**

(54) **Vibration damper of constrained laminate type.**

(30) Priority: **24.10.81 JP 169428/81**

(43) Date of publication of application:
**04.05.83 Bulletin 83/18**

(45) Publication of the grant of the patent:
**27.08.86 Bulletin 86/35**

(84) Designated Contracting States:
**DE FR GB**

(56) References cited:
**GB-A-1 134 063**
**GB-A-1 149 376**
**GB-A-1 263 598**
**GB-A-1 481 355**
**GB-A-2 041 291**

(73) Proprietor: **NISSAN MOTOR CO., LTD.**
**No.2, Takara-cho, Kanagawa-ku**
**Yokohama-shi Kanagawa-ken 221 (JP)**

(72) Inventor: **Takasaki, Tadashi**
**c/o Oppama Plant of Nissan Motor Co., Ltd.**
**No. 1, Natsushima-cho Yokosuka City (JP)**
Inventor: **Nakajuma, Masao**
**c/o Oppama Plant of Nissan Motor Co., Ltd.**
**No. 1, Natsushima-cho Yokosuka City (JP)**

(74) Representative: **Patentanwälte Grünecker, Dr.**
**Kinkeldey, Dr. Stockmair, Dr. Schumann, Jakob,**
**Dr. Bezold, Meister, Hilgers, Dr. Meyer-Plath**
**Maximilianstrasse 58**
**D-8000 München 22 (DE)**

## Description

This invention relates to a vibration damper for application to various panels, such as the panels of automobile bodies, to damp vibrations of the panels usually for the purpose of reducing the noise attributed to the vibrations, the damper utilizing a viscoelastic damping material and being in the form of a laminate having a constraining layer adjacent the viscoelastic layer.

A well known method of damping vibration of a panel having a large surface area relative to the thickness is to apply a viscoelastic damping material in sheet form to the panel. In the viscoelastic material applied to the panel, a large amount of the mechanical or kinetic energy put into the material under vibration is converted into heat energy through molecular friction, and then dissipated. The damping performance is rated by loss factor that indicates the degree of conversion of the mechanical energy put into the material into heat energy. By using a viscoelastic material having a relatively large loss factor it is possible to considerably increase the loss factor of the composite structure of the panel and the applied damper. For example, asphalt, rubber and thermoplastic resins have been used as viscoelastic materials in vibration dampers for application to panels.

A familiar method of bonding a viscoelastic sheet to a metal panel is to use an adhesive prepared independently of the viscoelastic sheet. For application to steel panels, it has been proposed to add a powdered magnetic material such as ferrite to the viscoelastic material before its shaping into sheet form. For application to the panels of automobile bodies which are subject to heating during the production process to cure the paint coating films formed by using paints of thermosetting type, it has been put into industrial practice to use dampier sheets formed of a heat-meltable viscoelastic composition to achieve spontaneous adhesion of the damper sheets to the panels to be damped during heat curing of the paint coating films.

Single-layer dampers consist of a sheet entirely formed of a viscoelastic material. However, single-layer dampers are relatively low in the damping effect which requires the use of a relatively thick damper sheet when a sufficiently high damping effect is required.

A conventional damper of the so-called constrained three-layered type is already shown in GB—A—2041291. This document discloses a vibration damper for application to a panel which comprises an adhesive layer which may be of hot melt adhesive, a constraining layer in the form of a composition consisting of uncured thermosetting resin and an inorganic filler in the form of a mineral or glass fiber matt and a viscoelastic layer sandwiched between the adhesive layer and the constraining layer.

In a damper of this type applied to a panel which undergoes vibration, the rigid constraining layer forces the underlying viscoelastic layer to undergo shear deformation and hence has the effect of enhancing the damping effect. As an advantage over a single-layer damper, a constrained two-layer damper can be made higher in vibration damping performance and lighter in weight by suitably selecting the viscoelastic and constraining materials and by appropriately determining the thicknesses of the respective layers.

However, the use of an adhesive or tacky viscoelastic material offers inconvenience to handling of the damper of this type and raises a more serious problem at the stage of applying the damper to an intricately shaped panel such as a floor panel of an automobile body. That is, a very troublesome procedure is required for accurate locating of this damper on such a panel and for close and uniform contacting of the damper over the entire area thereof with the panel surface. Besides the tackiness of the viscoelastic layer, the existence of the hard constraining layer offers difficulty in accomplishing precise deformation of the damper in conformamce with the intricate shape of the panel surface.

In producing the conventional laminated damper the viscoelastic layer is formed by applying a selected viscoelastic material to the surface of either the bonding layer or the constraining layer. At this stage, usually it is necessary to mix an organic solvent with a viscoelastic material to lower the viscosity to a level suitable for application by brushing or spraying, for example. However, the use of the solvent will possibly cause difficulties in uniform application of the viscoelastic material to the surface of the bonding layer or the constraining layer by reason of local deformation of the surface of the bonding or constraining layer caused by the action of the solvent on the bonding or constraining material.

It is, therefore, an object of the present invention to provide an improved damper of the constrained three-layer type.

According to the invention, a vibration damper of the type indicated in the precharacterising clause of claim 1 is improved in that the viscoelastic layer comprises a double-faced adhesive type which consists of a plastic film, said viscoelastic material being coated to both sides of said film.

It should be noted, that a solvent will be used also in producing the above mentioned adhesive tape, but of course the solvent is evaporated before the sandwiching of the adhesive tape between the suitable bonding layer and the constraining layer.

It is an object of the present invention to provide a novel vibration damper of the constrained laminate type for application to panels such as various panels of automobile bodies, which damper is relatively light in weight per unit area, sufficiently high in damping performance and convenient for handling and can easily and accurately be bonded to panels to be damped even when the panels are intricate in surface shape.

A vibration damper according to the invention is in the form of a three-layered laminate, which

2

comprises a meltable bonding layer to be brought into contact with a panel to be damped, a viscoelastic layer and a constraining layer laminated such that the viscoelastic layer is intimately sandwiched between the bonding layer and the constraining layer. The constraining layer of this damper is formed of a resin composition comprising an uncured thermosetting resin and an inorganic filler.

Preferred examples of the meltable material of the bonding layer in this damper are thermoplastic synthetic resins and asphalt. The bonding layer may contain certain fillers. Preferred examples of the viscoelastic material are acrylic resins and unvulcanized rubbers including natural rubber and synthetic rubbers. Various thermosetting resins are useful for the constraining layer, and epoxy resin is named as a particularly preferable example. Preferred examples of the inorganic filler to be added to the thermosetting resin are talc, calcium carbonate, mica, asbestos and fiber glass.

A vibration damper according to the invention is relatively light in weight per unit area, and at room temperature both the bonding layer and the constraining layer are not so tacky. Bonding of this damper to a metal panel to be damped is accomplished by first placing the damper on the panel with the meltable bonding layer of the damper in contact with the panel surface and then heating the damper on the panel so as to cause melting of the bonding layer and curing of the thermosetting resin as the principal material of the constraining layer. During an initial stage of the heating, not only the bonding layer but also the constraining layer softens in advance of the progress of curing of the thermosetting resin. Therefore, the damper as a whole becomes plastic and undergoes spontaneous deformation by the action of its own dead load, so that the bonding layer on the downside is pressed against the panel surface. Even when the panel surface is curved or locally projected or depressed, the initial placing of the damper on the panel can be done without the need of taking care to bring the damper entirely into close contact with the shaped surface of the panel because the aforementioned spontaneous deformation of the damper proceeds in exact compliance with the shape of the panel surface to result in intimate contact of the entire area of the damper with the panel surface.

Upon completion of the heat curing of the thermosetting resin, the constraining layer becomes rigid in the deformed state and serves the function of constraining the underlying viscoelastic layer. In the state adhering to the panel, the bonding layer serves as a spacer between the panel surface and the viscoelastic layer.

Thus, the damper according to the invention is convenient for handling and can accurately be bonded to various metal panels by easy operations and, hence, at low labor cost. Moreover, this damper is sufficiently high in vibration damping performance. For example, by using a damper of the invention having a total thickness of about 2—3 mm it is possible to render the loss factor of a composite structure of a steel panel and the damper bonded thereto above 0.3. Furthermore, the relatively light weight of this damper enables to reduce the gross weight of the composite structure. The advantages of the damper according to the invention are fully exhibited particularly when the damper is applied to metal panels of automobile bodies for the purpose of lowering the noise levels by damping structural vibrations.

Brief description of the drawings

Fig. 1 is a schematic and perspective view of a vibration damper according to the invention;

Figs. 2—4 illustrate the manner of adhesion of a damper according to the invention to an experimentally shaped steel sheet; and

Fig. 5 and 6 are graphs showing the vibration damping performance of some exemplary dampers according to the invention with respect to the weight per unit area of each damper and the thickness of the viscoelastic layer in each damper.

Description of the preferred embodiments

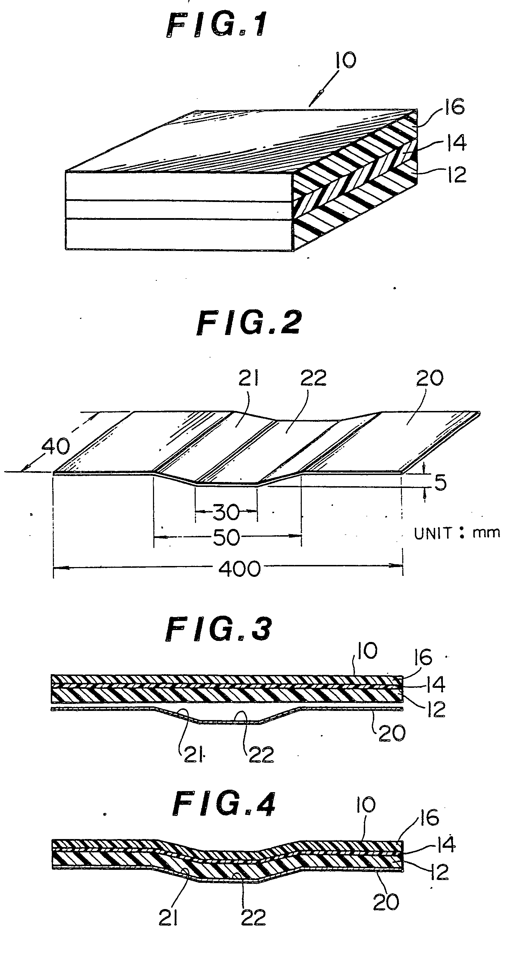

Fig. 1 shows a fundamental construction of a damper 10 according to the invention. As described hereinbefore, the damper 10 takes the form of a three-layered laminate consisting of a meltable bonding layer 12, a viscoelastic layer 14 and a constraining layer 16. Both the bonding layer 12 and the constraining layer 16 are in intimate contact with the interposed viscoelastic layer 14.

The meltable material of the bonding layer 12 needs to be high in adhering property in a heated and melted state because, as mentioned hereinbefore, the bonding layer 12 is expected to strongly adhere to a panel surface solely by the action of the dead load of the damper 10 without applying any extra pressure to the damper 10. Therefore, it is suitable to use either a thermoplastic synthetic resin or asphalt, or a mixture of such a resin and asphalt, as the meltable material of the bonding layer 12. For example, polyamide, polyester, polyurethane, poly(vinyl butyral), modified polyolefin and copolymer of vinyl acetate and ethylene can be named as suitable thermoplastic resins. These resins are all available in sheet form. In most cases, however, it is more favorable to use an asphalt sheet, which may contain certain additives, as will be understood from the fact that asphalt is used as the material of conventional vibration dampers of the unconstrained single layer type. Whether asphalt or thermoplastic resin is used, the meltable bonding layer 12 may optionally contain an inorganic filler such as talc, asbestos and/or calcium carbonate. However, it is suitable that the amount of the inorganic filler does not exceed 70% of the total weight of the meltable bonding layer 12. When asphalt is used, it is optional to add a minor amount of rubber, which may be a reclaimed rubber, to asphalt.

The viscoelastic layer 14 is formed of a viscoelastic and adhesive material. This layer 14 serves the function of damping or attenuating mechanical vibrations and, besides, serves as an adhesive layer to bond the constraining layer 16 to the meltable bonding layer 12. When the damper 10 is applied to a metal panel to be damped, vibration of the panel produces shear strains in the viscoelastic layer 14 of the damper 10 so that the viscoelastic layer 14 can convert the kinetic energy of the vibration into heat energy and consequentially dissipate the energy, and the viscoelastic layer 14 keeps the constraining layer 16 united to the bonding layer 12 during such process of dissipating the energy put into the damper 10.

Therefore, it is desirable to use a viscoelastic material having a high adhesion property as the material of this viscoelastic layer 14. Among various thermoplastic and viscoelastic polymers, a preferred example is an acrylic ester resin adhesive which is a copolymer of a $C_4$—$C_{10}$ alkyl ester of acrylic acid with a lower alkyl ester of either acrylic acid or methacrylic acid and, optionally, a suitable vinylic compuond such as vinyl acetate. It is also preferred to use an unvulcanized rubber base adhesive as the viscoleastic material. Either natural rubber or synthetic rubber such as butyl rubber or styrene-butadiene rubber can be used as the principal component of the rubber base adhesive. In preparing a rubber base viscoelastic material, it is optional to use certain additive(s) such as reclaimed rubber prepared through vulcanization-reversing process, petroleum resin and/or inorganic filler.

In producing the laminated damper 10 of Fig. 1, the viscoelastic layer 14 is formed by applying a selected viscoelastic material to the surface of either the meltable bonding layer 12 or the constraining layer 16. At this stage, usually it is necessary to mix an organic solvent with the viscoelastic material to lower the viscosity to a level suitable for application by brushing or spraying for example. However, the use of the solvent will possibly offer difficulty in uniform application of the viscoelastic material to the surface of the bonding layer 12 or the constraining layer 16 by reason of local deformation of the surface of the bonding or constraining layer caused by the action of the solvent on the bonding or constraining material. As a preferred technique to obviate such a problem, the viscoelastic layer 14 can be provided by using a double-faced adhesive tape produced by coating both sides of a thin plastic film with a viscoelastic adhesive. A solvent will be used also in producing such an adhesive tape, but of course the solvent is evaporated before the sandwiching of the adhesive tape between the meltable bonding layer 12 and the constraining layer 16.

The constraining layer 16 is formed fundamentally of a mixture of an uncured thermosetting resin and inorganic filler which may be a mixture of two or more kinds of filler materials, and usually contains a curing agent for the thermosetting resin. As described hereinbefore, curing of the thermosetting resin to render the constraining layer 16 rigid is accomplished by heating after placing of the damper 10 on a panel to be damped. The presence of the constraining layer 16 in the damper 10 applied to a panel to be damped has the effect of forcing the viscoelastic layer 14 to undergo shear deformation upon vibration of the panel and therefore enhancing the vibration damping effect of the viscoelastic layer 14.

The fundamental effect of the constraining layer 16 can be obtained even by using a metal sheet such as aluminum sheet as the constraining layer, but the employment of a metal constraining layer makes it difficult to bring the damper into close contact with an intricately shaped panel surface. For this reason, metals are excluded from the constraining materials in the present invention.

Examples of thermosetting resins useful for the constraining layer 16 are alkyd resin, allylic resin, amino resin, epoxy resin, unsaturated polyester resin and polybutadiene resin, and in most cases the use of an epoxy resin is preferred.

As to the inorganic filler for the constraining layer 16, talc, asbestos, glass fiber, mica and calcium carbonate are named as preferred examples.

In preparing a resin composition for the constraining layer 16, the proportion of the inorganic filler to the thermosetting resin is determined with consideration of formability of the resin composition besides the mechanical properties of the finished constraining layer 16. For example, the results of the following experiments illustrate suitable amounts of the inorganic filler in the resin composition.

In the first experiment talc was employed as the inorganic filler, and the amount of talc to be added to 100 parts by weight of an epoxy resin (Epikote 828) was varied over the range from 100 to 350 parts by weight. In each proportion the resin and talc were blended and kneaded for about 20 min, and the resultant resin composition was tested for its formability into a sheet by either calendering or pressing. The result of this experiment is presented in Table 1.

TABLE 1

| Talc (parts by wt.) | Formability of resin composition |
|---|---|
| 100 | resin composition was mayonnaise-like and could not be formed into sheet |
| 150 | resin composition was pasty but too mushy, and could not be formed into sheet |
| 200 | sheet-forming was possible, but the sheet surface was very tacky |
| 225 | " |
| 250 | sheet-forming was easy: the sheet was rather soft but fully practicable |
| 300 | sheet-forming was easy: the sheet was adequate in flexibility |
| 325 | sheet-forming was easy: but sheet was rather stiff but fully practicable |
| 350 | sheet-forming was possible, but the sheet was too stiff |

In the next experiment powdered calcium carbonate was employed as the inorganic filler instead of the talc in the first experiment, and the amount of calcium carbonate to be added to 100 parts by weight of the epoxy resin (Epikote 828) was varied over the range from 150 to 350 parts by weight. In each proportion of the filler to the resin, the preparation and testing of resin composition were carried out in the way as described in the first experiment. Table 2 shows the result of this experiment.

TABLE 2

| Calcium carbonate (parts by wt.) | Formability of resin composition |
|---|---|
| 150 | resin composition was pasty but too mushy, and could not be formed into sheet |
| 200 | " |
| 250 | " |
| 275 | sheet-forming was possible: the sheet was rather soft |
| 300 | sheet-forming was easy: the sheet was adequate in flexibility |
| 325 | sheet-forming was easy: the sheet was rather stiff but practicable |
| 350 | sheet-forming was possible, but the sheet was too stiff |

The results of these experiments demonstrate that, when an epoxy resin is employed as the thermosetting resin for the constraining layer 16, a preferable range of the amount of the inorganic filler to be added to 100 parts by weight of the resin is from 200 to 350 parts by weight, and that the most preferable range is from 250 to 325 parts by weight.

The present invention will be illustrated by the following nonlimitative examples.

Example 1

A meltable composition was prepared by the following process. First, 60 parts by weight of straight asphalt which exhibited a penetration value of 64 at 25°C, 40 parts by weight of blown asphalt which exhibited a penetration value of 37 at 25°C, and 5 parts by weight of a reclaimed rubber obtained from rubber tires were blended and kneaded for 10 min in a "Banbury" mixer kept heated at 100°C. Then 120 parts by weight of powdered calcium carbonate and 10 parts by weight of finely divided asbestos were added to the asphalt-rubber mixture, and the kneading was continued for additional 10 min. The thus prepared composition was shaped into a 1 mm thick sheet by means of calender rolls.

A resin composition for use as a constraining material was prepared by the following process. First, 100 parts by weight of a liquid epoxy resin (Epikote 828) was kept heated at about 80°C in a hot water bath, and 5 parts by weight of a complex compound of boron trifluoride with monoethylamine employed as curing agent was dissolved in the epoxy resin. Then, 100 parts by weight of the epoxy resin containing the curing agent and 200 parts by weight of talc were blended and kneaded for 20 min. By using calender rolls, the thus prepared resin composition was shaped into a 0.9 mm thick sheet in the state sandwiched between two sheets of releasing paper treated with silicone.

As a viscoelastic material in this example, use was made of a double-faced adhesive tape which had an acrylic ester resin layer on either side of a thin polyester film. The total thickness of the acrylic ester resin layers in this adhesive tape was 0.15 mm. A vibration damper according to the invention in the form of a three-layered laminate as shown in Fig. 1 was produced by placing the sheet 12 of the meltable composition, the double-faced adhesive tape used as the viscoelastic layer 14 and the sheet 16 of the constraining material, preceded by removal of the releasing paper, on top of one another such that the meltable bonding layer 12 and the constraining layer 16 were respectively brought into intimate contact with the double-faced adhesive tape employed as the viscoelastic layer 14 over the entire area of the laminate 10. The weight of this laminate damper 10 was 3610 g per 1 m$^2$.

This damper 10 was placed on a steel sheet having a thickness of 1 mm with the meltable bonding layer 12 in contact with the steel sheet, and the resultant provisional assembly was heated in an electric furnace at 140°C for 60 min. After cooling, it was confirmed that the laminate damper 10 had intimately and firmly adhered to the steel sheet over the entire area of the damper 10 and that the epoxy resin of the constraining layer 16 had cured completely.

Test pieces each in the shape of 10 mm×260 mm strip were cut out of the steel sheet with the damper 10 adhered thereto, and these test pieces were subjected to measurement of the composite loss factor of the combination of the steel sheet and the damper 10 by the cantilever beam resonance method. The composite loss factor was measured to be 0.30. This loss factor value can be taken as demonstrating sufficiently high damping performance of vibration dampers according to the invention.

An experiment was carried out to examine the manner of thermal deformation of the three-layered damper 10 of this example in regard to the ability of following the surface shapes of panels to be damped.

Referring to Fig. 2, a steel sheet 20 having a thickness of 0.6 mm was bent into the illustrated shape. At room temperature, the three-layered damper 10 produced in Example 1 was placed on the shaped steel sheet 20 held horizontal, as shown in Fig. 3, with the meltable bonding layer 12 in contact with the steel sheet 20. In a region above the depressed middle portion of the steel sheet 20, the damper 10 was observed to be slightly drooping but not to be in contact with the horizontal central area 22 or the slant areas 21 of the steel sheet 20. Then the steel sheet 20 with the damper 10 placed thereon was heated in an electric furnace at 140°C for 60 min. As the result of this heating treatment, the damper 10 deformed in compliance with the bent shape of the steel sheet 20 as shown in Fig. 4, and it was confirmed that the meltable bonding layer 12 of the damper 10 was in intimate contact with the steel sheet 20 even in the slant areas 21 and the horizontal central area 22.

Example 2

A resin composition for use as a constraining material was prepared by adding 250 parts by weight of talc and 10 parts by weight of fine particles of mica to 100 parts by weight of the mixture of the epoxy resin and the curing agent employed in Example 1 and kneading the resultant mixture for 20 min. By using calender rolls, the thus prepared resin composition was shaped into a 0.9 mm thick sheet in the state sandwiched between two sheets of releasing paper treated with silicone.

A three-layered damper 10 was produced by intimately laminating the sheet 16 of the constraining material prepared in this example, the double-faced adhesive tape 14 used in Example 1 and the 1.0 mm thick sheet 12 of the meltable bonding material prepared in Example 1. The weight of this damper 10 was 3600 g per 1 m$^2$.

The damper 10 was bonded to a 1 mm thick steel sheet by the method described in Example 1, and the loss factor of the damped system was measured by the aforementioned method. In this case the loss factor was 0.38.

The damper 10 was subjected to the thermal deformation test described hereinbefore with reference to Figs. 2—4. The heating treatment resulted in intimate adhesion of the meltable bonding layer 12 to the shaped steel sheet 20 over the entire area.

Examples 3—18

In these examples, three-layered dampers of fundamentally the same construction as the damper 10 of Example 1 were produced by widely varying the thicknesses of the meltable bonding layer 12, viscoelastic layer 14 and the constraining layer 16 for the purpose of examining the effect of the thickness of the respective layers on the loss factor. The following materials were used throughout Examples 3—18.

As the meltable bonding material, use was made of a commercially available asphalt base composition in the form of sheet which was 1.8 mm thick and weighed 2650 g per 1 m$^2$. Pressing of this asphalt base sheet at room temperature gave a 1.1 mm thick sheet (2000 g/m$^2$) of the same material, and pressing of the same asphalt sheet headed to 40°C gave a 1.0 mm thick sheet (1590 g/m$^2$) and a 0.6 mm thick sheet (1100 g/m$^2$). In the examples, these four differently thick sheets of the same asphalt base composition were used alternately.

As the viscoelastic material, use was made of the double-faced adhesive tape (acrylic ester resin, 0.15 mm thick) described in Example 1. In each example, this adhesive tape was used either in a single layer (0.15 mm thick) or in double layers (0.30 mm thick).

As the constraining material, a resin composition was prepared by adding 300 parts by weight of talc to 100 parts by weight of the mixture of the epoxy resin and the curing agent described in Example 1 and kneading the resultant mixture for 20 min. By pressing, this resin composition was shaped into three differently thick sheets, which were 0.6 mm thick ($1500$ g/m$^2$), 1.0 mm thick ($2040$ g/m$^2$) and 1.1 mm ($2500$ g/m$^2$) thick, respectively. In each example a selection was made from these three differently thick sheets of the same composition.

The following Table 3 shows the variations in the thicknesses of the three layers in the dampers produced in Examples 3—18. These dampers were produced generally in the same manner as in Example 1.

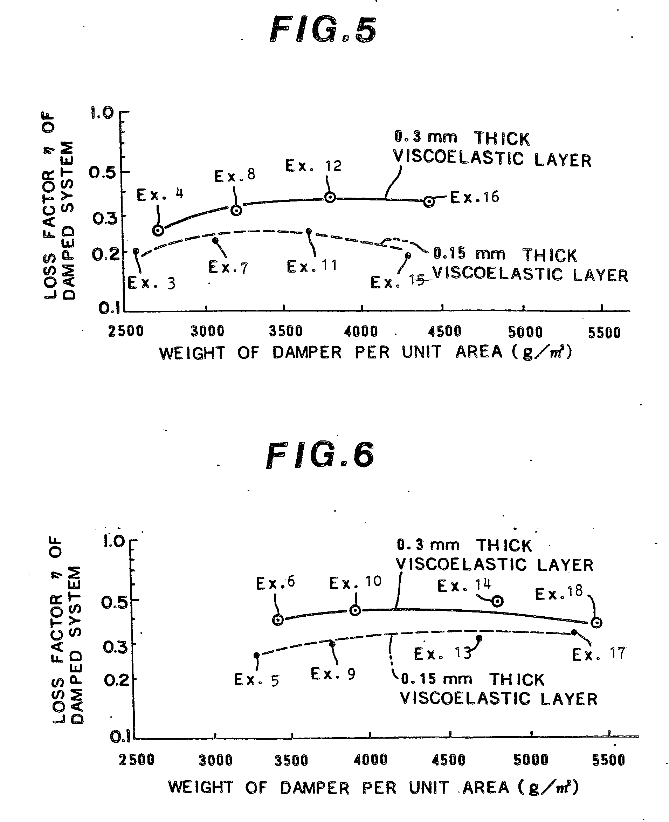

Each of the dampers produced in Examples 3—18 was bonded to a 1 mm thick steel sheet by the method described in Example 1, and the loss factor of the resultant composite structure was measured by the same method as in Example 1. The measurement was carried out at 25°C. Table 3 contains the loss factor values measured in this manner, and the graphs of Figs. 5 and 6 show the same loss factor values as a function of the weight of the damper per unit area, taking the thickness of the viscoelastic layer as a parameter.

With respect to the combination of the bonding, viscoelastic and constraining materials employed in Examples 4—19, the following tendencies are understood from the data in Table 3 and Figs. 5 and 6.

When the thickness of the constraining layer 16 is 0.6 mm, the loss factor of the composite structure of the steel sheet and the damper can be rendered above 0.3 as has been desired by employing the 0.3 mm thick viscoelastic layer 14 and, at the same time, by determining the thickness of the meltable bonding layer 12 such that the total weight of the three-layered damper becomes greater than about 3000 g/m$^2$, whereas it is difficult to render the loss factor above 0.3 even by employing the 1.8 mm thick meltable bonding layer 12 ($2650$ g/m$^2$) when the thickness of the viscoelastic layer 14 is 0.15 mm. When the thickness of the constraining layer 16 is 1.0 mm or 1.1 mm, a desirable amount of damping represented by the loss factor values above 0.3 can be attained even by reducing the thickness of the meltable bonding layer 12 to 0.6 mm ($1100$ g/m$^2$), although the thickness of the meltable bonding layer 16 needs to be sufficient to render the total weight of the three-layered damper greater than about 3500 g/m$^2$ when the thickness of the viscoelastic layer 14 is 0.15 mm. In brief, it is possible to considerably reduce the thickness of the meltable bonding layer 12 when the thickness of the viscoelastic layer 14 is 0.3 mm or greater.

TABLE 3

| | Meltable bonding layer | | | Viscoelastic layer | | Constraining layer | | Whole damper | | Loss factor η | Resonance frequency (Hz) |
|---|---|---|---|---|---|---|---|---|---|---|---|
| | Thickness (mm) | Weight (g/m²) | Density (g/cm³) | Thickness (mm) | Weight (g/m²) | Thickness (mm) | Weight (g/m²) | Thickness (mm) | Weight (g/m²) | | |
| Ex. 3 | 0.6 | 1100 | 1.8 | 0.15 | 140 | 0.6 | 1500 | 1.35 | 2580 | 0.200 | 134.3 |
| Ex. 4 | 0.6 | 1100 | 1.8 | 0.30 | 280 | 0.6 | 1500 | 1.50 | 2720 | 0.255 | 128.0 |
| Ex. 5 | 0.6 | 1100 | 1.8 | 0.15 | 140 | 1.0 | 2040 | 1.75 | 3280 | 0.265 | 144.6 |
| Ex. 6 | 0.6 | 1100 | 1.8 | 0.30 | 280 | 1.0 | 2040 | 1.90 | 3420 | 0.396 | 129.4 |
| Ex. 7 | 1.0 | 1590 | 1.6 | 0.15 | 140 | 0.6 | 1500 | 1.75 | 3070 | 0.227 | 140.5 |
| Ex. 8 | 1.0 | 1590 | 1.6 | 0.30 | 280 | 0.6 | 1500 | 1.90 | 3210 | 0.319 | 138.7 |
| Ex. 9 | 1.0 | 1590 | 1.6 | 0.15 | 140 | 1.0 | 2040 | 2.15 | 3770 | 0.298 | 164.0 |
| Ex. 10 | 1.0 | 1590 | 1.6 | 0.30 | 280 | 1.0 | 2040 | 2.30 | 3910 | 0.437 | 155.4 |
| Ex. 11 | 1.1 | 2000 | 1.8 | 0.15 | 140 | 0.6 | 1500 | 1.85 | 3640 | 0.25 | 173.6 |
| Ex. 12 | 1.1 | 2000 | 1.8 | 0.30 | 280 | 0.6 | 1500 | 2.00 | 3780 | 0.37 | 160.2 |
| Ex. 13 | 1.1 | 2000 | 1.8 | 0.15 | 140 | 1.1 | 2500 | 2.35 | 4640 | 0.32 | 191.7 |
| Ex. 14 | 1.1 | 2000 | 1.8 | 0.30 | 280 | 1.1 | 2500 | 2.50 | 4780 | 0.49 | 161.2 |
| Ex. 15 | 1.8 | 2650 | 1.5 | 0.15 | 140 | 0.6 | 1500 | 2.55 | 4290 | 0.19 | 185.1 |
| Ex. 16 | 1.8 | 2650 | 1.5 | 0.30 | 280 | 0.6 | 1500 | 2.70 | 4430 | 0.35 | 183.1 |
| Ex. 17 | 1.8 | 2650 | 1.5 | 0.15 | 140 | 1.1 | 2500 | 3.05 | 5290 | 0.34 | 217.1 |
| Ex. 18 | 1.8 | 2650 | 1.5 | 0.30 | 280 | 1.1 | 2500 | 3.20 | 5430 | 0.38 | 192.6 |

Reference 1

As a reference, a conventional vibration damper which was a single layer sheet of an asphalt base composition was tested. This sheet was 3.6 mm in thickness and weighed 6080 g per 1 m².

This damper sheet was placed on a 1 mm thick steel sheet held horizontal and heated in an electric furnace at 140°C for 30 min. The heating treatment resulted in uniform adhesion of the damper sheet to the steel sheet. At 24°C, the less factor of the steel sheet and the damper was measured to be 0.28 by the same method as in Example 1. This damper was subjected to the thermal deformation test described hereinbefore with reference to Figs. 2—4. As a modification in the test, the duration of the heating at 140°C was shortened to 30 min. After the heating it was confirmed that the damper sheet had deformed in compliance with the bent shape of the steel sheet 20 and was in intimate contact with the steel sheet 20 even in the slant areas 21 and the horizontal central area 22.

Thus, this damper sheet was fairly good in its damping performance, ability of following the shapes of panels to be damped and ease of its application to such panels. However, a considerably heavy weight per unit area is a serious disadvantage of this damper sheet.

Reference 2

Tested as another reference was a conventional damper in the form of a two-layered laminate consisting of a 0.5 mm thick aluminum plate used as constraining layer and a 0.13 mm thick layer of an acrylic ester base adhesive used as viscoelastic material.

This damper was placed on a 1 mm thick steel sheet with the viscoelastic layer on the downside, and intimate contact of the viscoelastic layer with the steel sheet over the entire area of the damper was achieved by applying pressure to the damper by using a hand roller. At 24°C, the composite loss factor of the steel sheet and the damper was measured to be 0.21 by the same method as in Example 1.

It was tried to intimately bond this damper sheet to the shaped steel sheet 20 shown in Fig. 2, but a very troublesome procedure was required for achievement of desired bonding in the depressed middle portion of the steel sheet 20. At the start of the bonding procedure an end portion of the damper sheet was brought into contact with one of the two unbent end areas of the steel sheet 20, and then the remaining portion of the damper sheet was forcibly deformed a little by little by careful application of a pressure so as to bend the damper sheet in compliance with the shape of the depressed middle portion of the steel sheet. At each bend line of the steel sheet 20, especial care was needed for accurate bending of the damper sheet along and in close contact with the bend line on the steel sheet 20.

Thus, this damper was evaluated as practically inapplicable to panels having intricately shaped surfaces although this damper sheet was very light in weight and fairly good in damping performance.

**Claims**

1. A vibration damper for application to a panel in the form of a three-layered laminate comprising a meltable bonding layer (12) to be brought into contact with a panel to be damped, a viscoelastic layer (14) comprising a thermoplastic resin or an unvulcanized rubber as a viscoelastic material, and a constraining layer (16) laminated such that said viscoelastic layer is intimately sandwiched between said bonding layer and said constraining layer, said constraining layer (16) being formed of a resin composition comprising an uncured thermosetting resin and an inorganic filler, characterised in that said viscoelastic layer (14) comprises a double-faced adhesive tape comprising a plastic film, said viscoelastic material being coated on both sides of said film.

2. A vibration damper according to claim 1, wherein said meltable bonding layer (12) comprise a thermoplastic resin.

3. A vibration damper according to claim 1, wherein said meltable bonding layer (12) comprises asphalt.

4. A vibration damper according to claim 1, wherein said meltable bonding layer comprises a thermoplastic resin and asphalt.

5. A vibration damper according to claim 3 or 4, wherein said meltable bonding layer further comprises a rubber as an auxiliary material.

6. A vibration damper according to claim 2 or 3, wherein said meltable bonding layer further comprises an inorganic filler.

7. A vibration damper according to claim 6, wherein said inorganic filler in said bonding layer is selected from the group consisting of talc, asbestos and calcium carbonate.

8. A vibration damper according to claim 1, wherein said thermoplastic resin is an acrylic ester resin.

9. A vibration damper according to claim 8, wherein said acrylic ester resin comprises a copolymer of a $C_4$ to $C_{10}$ alkyl ester of acrylic acid and a lower alkyl ester of acrylic acid or methacrylic acid.

10. A vibration damper according to claim 1, wherein said thermosetting resin in said constraining layer (16) is selected from the group consisting of alkyd resin, allylic resin, amino resin, epoxy resin, polybutadiene resin and unsaturated polyester resin.

11. A vibration damper according to claim 10, wherein said constraining layer further comprises a curing agent for said thermosetting resin.

12. A vibration damper according to claim 1, wherein said thermosetting resin in said constraining

9

layer (16) is an epoxy resin and the inorganic filler in said constraining layer is talc or calcium carbonate, the weight ratio of said inorgnic filler in said constraining layer to said epoxy resin being in the range from 200:100 to 350:100.

13. A vibration damper according to claim 12, wherein said weight ratio is in the range from 250:100 to 325:100.

14. A vibration damper according to claim 12, wherein said constraining layer further comprises a curing agent for said epoxy resin.

15. A vibration damper according to claim 10 or 12, wherein said inorganic filler in said constraining layer is selected from the group consisting of talc, asbestos, glass fiber, mica and calcium carbonate.

## Patentansprüche

1. Schwingungsdämpfer zur Verwendung an einer Wandung, in Form eines dreischichtigen Laminats mit einer schmelzbaren Verbindungsschicht (12), welche in Kontakt mit der zu dämpfenden Wandung gebracht werden kann, einer viskoelastischen Schicht (14), welche einen thermoplastischen Kunststoff oder einen nicht vulkanisierten Gummi als viskoelastisches Material umfaßt, und einer Versteifungsschicht (16), welche so laminiert ist, daß die visko-elastische Schicht innig zwischen die Verbindungsschicht und die Versteifungsschichtung zwischengelegt ist, wobei die Versteifungsschicht (16) aus einer Kunststoffzusammensetzung gebildet ist, welche einen ungehärteten, warmhärtbaren Kunststoff und einen anorganischen Füllstoff aufweist, dadurch gekennzeichnet, daß die viskoelastische Schicht (14) ein doppelseitiges, einen plastischen Film umfassendes Klebeband umfaßt, und daß das viskoelastische Material auf beiden Seiten des Films vorgesehen ist.

2. Schwingungsdämpfer nach Anspruch 1, wobei die schmelzbare Verbindungsschicht (12) einen thermoplastischen Kunststoff umfaßt.

3. Schwingungsdämpfer nach Anspruch 1, wobei die schmelzbare Verbindungsschicht (12) Asphalt umfaßt.

4. Schwingungsdämpfer nach Anspruch 1, wobei die schmelzbare Verbindungsschicht einen thermoplastischen Kunststoff und Asphalt umfaßt.

5. Schwingungsdämpfer nach Anspruch 3 oder 4, wobei die schmelzbare Verbindungsschicht weiterhin einen Gummi als Hilfsmaterial umfaßt.

6. Schwingungsdämpfer nach Anspruch 2 oder 3, wobei die schemlzbare Verbindungsschicht weiterhin einen anorganischen Füllstoff umfaßt.

7. Schwingungsdämpfer nach Anspruch 6, wobei der anorganische Füllstoff in der Verbindungsschicht aus Kalk, Asbest oder Kalziumcarbonat besteht.

8. Schwingungsdämpfer nach Anspruch 1, wobei der thermoplastische Kunststoff ein Acrylesterharz ist.

9. Schwingungsdämpfer nach Anspruch 8, wobei das Acrylesterharz ein Copolymer eines $C_4$ bis $C_{10}$ Alkylesters aus Acrylsäure und einen Niederalkylester aus Acrylsäure oder Methacrylsäure umfaßt.

10. Schwingungsdämpfer nach Anspruch 1, wobei der warmhärtbare Kunststoff in der Versteifungsschicht (16) aus Alkydharz. Allylharz, Aminoharz, Epoxyharz, Polybutadienharz oder ungesättigtem Polyesterharz besteht.

11. Schwingungsdämpfer nach Anspruch 10, wobei die Versteifungsschicht weiterhin ein Härtungsmittel für den warmhärtbaren Kunststoff umfaßt.

12. Schwingungsdämpfer nach Anspruch 1, wobei der warmhärtbare Kunststoff in der Versteifungsschicht (16) ein Epoxyharz ist un der anorganische Fullstoff in der Versteifungsschicht Talk oder Kalciumcarbonat ist, wobei das Gewichtsverhältnis des anorganischen Füllstoffs in der Versteifungsschicht zu dem Epoxyharz in einem Bereich von 200:100 bis 350:100 ist.

13. Schwingungsdämpfer nach Anspruch 12, wobei das Gewichtsverhältnis in einem Bereich von 250:100 bis 325:100 liegt.

14. Schwingungsdämpfer nach Anspruch 12, wobei die Versteifungsschicht weiterhin ein Härtungsmittel für das Epoxyharz umfaßt.

15. Schwingungsdämpfer nach Anspruch 10 oder 12, wobei der anorganische Füllstoff in der Versteifungsschicht aus Talk, Asbest, Glasfaser, Glimmer oder Kalziumcarbonat besteht.

## Revendications

1. Amortisseur de vibrations pour application à un panneau sous le forme d'un laminage à trois couches comprenant une couche fusible de liaison (12) à mettre en contact avec un panneau à amortir, une couche viscoélastique (14) comprenant une résine thermoplastique ou un caoutchouc non vulcanisé en tent que matériau viscoélastique et une couche de retenue (16) feuilletée de façon que ladite couche visco-élastique soit mise en sandwich intime entre ladite couche de liaison et ladite couche de retenue, ladite couche de retenue (16) étant formée d'une composition de résine comprenant une résine thermodurcissable non durcie et une charge inorganique, caractérisé en ce que ladite couche visco-élastique (14) comprend une bande adhésive double face comprenant un film en plastique, ladite matière visco-élastique étant enduite sur les deux côtés dudit film.

2. Amortisseur de vibrations selon la revendication 1, où ladite couche fusible de liaison (12) comprend une résine thermoplastique.

3. Amortisseur de vibrations selon la revendication 1, où ladite couche fusible de liaison (12) comprend de l'asphalte.

4. Amortisseur de vibrations selon la revendication 1, où ladite couche fusible de liaison comprend une résine thermoplastique et de l'asphalte.

5. Amortisseur de vibrations selon la revendication 3 ou 4, où ladite couche fusible de liaison comprend de plus un caoutchouc en tant que matériau auxiliaire.

6. Amortisseur de vibrations selon la revendication 2 ou 3, où ladite couche fusible de liaison comprend de plus une charge inorganique.

7. Amortisseur de vibrations selon la revendication 6, où ladite charge inorganique dans ladite couche de liaison est choisie dans le groupe consistant en talc, amiante et carbonate de calcium.

8. Amortisseur de vibrations selon la revendication 1, où ladite résine thermoplastique est une résine d'ester acrylique.

9. Amortisseur de vibrations selon la revendication 8, où ladite résine d'ester acrylique comprend un copolymère d'un alkyl ester $C_4$ à $C_{10}$ d'acide acrylique et un alkyl ester inférieure de l'acide acrylique ou de l'acide méthacrylique.

10. Amortisseur de vibrations selon la revendication 1, où ladite résine thermodurcissable dans ladite couche de retenue (16) est choisie dans le groupe consistant en résine alkyde, résine allylique, résine amino, résine époxy, résine de polybutadiène et résine de polyester insaturé.

11. Amortisseur de vibrations selon la revendication 10, où ladite couche de retenue comprend de plus un agent durcisseur de ladite résine thermodurcissable.

12. Amortisseur de vibrations selon la revendication 1, où ladite résine thermodurcissable dans ladite couche de retenue (16) est une résine époxy et la charge inorganique dans ladite couche de retenue est du talc ou du carbonate de calcium, le rapport pondéral de ladite charge inorganique dans ladite couche de retenue à ladite résine époxy étant dans la gamme de 200:100 à 350:100.

13. Amortisseur de vibrations selon la revendication 12, où ladite rapport pondéral est dans le gamme de 250:100 à 325:100.

14. Amortisseur de vibrations selon la revendication 12, où ladite couche de retenue comprend de plus un agent durcisseur de ladite résine époxy.

15. Amortisseur de vibrations selon la revendication 10 ou 12, où ladite charge inorganique dans ladite couche de retenue est choisie dans le groupe consistant en talc, amiante, fibre de verre, mica et carbonate de calcium.

0 077 987

# FIG.1

# FIG.2

UNIT : mm

# FIG.3

# FIG.4

1

## FIG.5

LOSS FACTOR η OF DAMPED SYSTEM

0.3 mm THICK VISCOELASTIC LAYER

Ex. 4
Ex. 8
Ex. 12
Ex.16
Ex. 3
Ex. 7
Ex. 11
Ex. 15

0.15 mm THICK VISCOELASTIC LAYER

WEIGHT OF DAMPER PER UNIT AREA (g/m²)

## FIG.6

LOSS FACTOR η OF DAMPED SYSTEM

0.3 mm THICK VISCOELASTIC LAYER

Ex.6
Ex. 10
Ex. 14
Ex.18
Ex. 5
Ex. 9
Ex. 13
Ex. 17

0.15 mm THICK VISCOELASTIC LAYER

WEIGHT OF DAMPER PER UNIT AREA (g/m²)